# EUROPEAN PATENT SPECIFICATION

(11) **EP 3 170 397 B1**
(45) Date of publication and mention of the grant of the patent: **29.08.2018**
(21) Application number: 16202137.2
(22) Date of filing: 23.10.2014
(51) Int. Cl.: A22C 25/14

(54) **A FISH PROCESSING APPARATUS AND METHOD**
VERFAHREN UND APPARAT ZUR BEARBEITUNG VON FISCH
PROCEDE DE TRAITEMENT DU POISSON ET APPAREIL CORRESPONDANT

(30) Priority: 25.10.2013 IE 20130326
(43) Date of publication of application: 24.05.2017
(62) Divisional of application: 14190071.2
(73) Proprietor: Carr, Edward, Sligo (IE)
(72) Inventor: Carr, Edward, Sligo (IE)
(74) Representative: Murgitroyd & Company

(56) References cited:
- DE-B- 1 177 783
- JP-A- S6 098 937
- JP-A- S6 099 593

## Description

### Field of the Invention

The present invention provides a fish processing apparatus and a corresponding method. More specifically, the invention provides a fish processing apparatus and method for heading and eviscerating fish.

### Background to the Invention

One of the initial steps of fish processing in order to prepare the fish for further steps (e.g. mincing, cutting etc.) involves removing heads and bowels from the fish and subsequently skinning and boning the fish. Since every fish species have their own shape peculiarities, different fish processing machines are required for nearly every fish species. Fish needs to be fed into a machine in a specific orientation which is different for every species and different mechanisms are used for gripping and transferring fish within the machine depending on the species. US4344207 (Rosenberg), JP6099593 (Ogawa), US4307491 (Dafgard), WO9114372 (Ogawa) and US2955316 (Danielsson) disclose such machines. DE1177783B discloses a machine according to the preamble of claim 1. In the recent years, boarfish (*Capros Aper*) has become abundant along the northeast Atlantic continental shelf, off the coasts of Ireland, Scotland and Norway. Heretofore, boarfish was primarily used for industrial purposes. However, the flesh of the boarfish is white and has good gustatory qualities which make boarfish highly suitable for use in fish mince products such as fish-based surimi (fish paste primarily used in Asian food for imitating shellfish meat), fish cakes or fish fingers. However, boarfish is small (on average 10-15cm in total length and 40-60g weight), compressed and has strong spine and scales. Machines used for traditional fish species are not suitable for boarfish. The only currently available method of heading and gutting boarfish is doing this manually. This is labour intensive, considering that the fish is small and bony, and, thus, uneconomical. Additionally, to prepare fish for mincing, heading and gutting must be very thorough making sure that no particles of fish entrails or eyes (especially eyes, because they contain ink which instantly darkens the mince) get into the mince, otherwise the entire batch of mince might be compromised. Again, because the fish is small and bony, it is very difficult to clean the fish properly using the manual method. Therefore high percentage of the fish is not properly cleaned and thus the quality of the resulting mince almost invariably suffers.

The inventor has appreciated the need for an improvement in boarfish processing techniques.

Accordingly, the object of the present invention is to provide a fish processing apparatus to automate the processing of boarfish or, indeed other fish species which are otherwise difficult to handle using existing machines.

### Summary of the Invention

According to a first aspect of the present invention there is provided a fish processing apparatus according to claim 1 comprising a first capturing arrangement comprising a first pair of capturing elements, the capturing elements being spaced apart defining a gap therebetween, the size of the gap corresponding to a predetermined range of sizes of a predetermined fish species (such as, for example, boarfish) so that upon delivery of the fish to the capturing elements, the fish is received in the gap and captured between the elements, the elements preventing the fish from passing through and out of the gap between the elements.

The capturing elements are preferably movable capturing elements. Thus, the capturing elements preferably function as both a capturing device and a transfer device.

The capturing elements may be configured to capture a plurality of fish at a time so that the fish are spaced apart from each other along the gap.

Advantageously, the first pair of capturing elements comprises a pair of substantially parallel feeder belts the feeder belts being spaced apart defining the gap. The feeder belts are preferably movable belts.

Preferably, the apparatus comprises a cutting arrangement, preferably provided at a location along the capturing elements for heading the fish captured between the capturing elements. Preferably the capturing elements are movable so as to deliver the captured fish to the cutting arrangement.

When viewed from above along the spine of the fish, boarfish has a thicker head and a thinner body. This is due to the bones at the neck on either side of the boarfish protruding laterally of the body of the boarfish. These bones are rigid and cannot be easily displaced or compressed towards each other. Thus, when the boarfish is delivered to the capturing elements, even in a random orientation, the boarfish enters the gap between the capturing elements (which may be head first, tail first, sideways or indeed at any angle in relation to the feeder belts) but gets caught between the capturing elements because the thicker head of the boarfish cannot pass between the capturing elements. The bones at the neck serve as a ledge which catches on the capturing elements and prevents the boarfish from passing through the gap in the capturing elements. The rear part of the boarfish (the part between gills and tail) is slightly heavier and therefore the rear part of the boarfish always passes through the gap between the capturing elements whereas the head remains captured by the capturing elements at the neck. Therefore, the boarfish gets captured by the capturing elements always in the same orientation regardless of the orientation in which the boarfish was delivered to the capturing elements. Thus, the boarfish is delivered to the cutting arrangement which cuts off the head of the boarfish always in the same orientation. It will be appreciated that the fish need not necessarily be boarfish but may indeed by any other species which have a thickening along their bodies which allows the fish to be captured between the capturing elements in the same orientation regardless of the orientation in which the fish has been delivered to the capturing elements.

Preferably, the apparatus comprises an arrangement configured to deliver fish to the capturing elements in random orientation. Preferably, the arrangement configured to deliver fish to the capturing elements in random orientation is configured to drop the fish onto the capturing elements from a location above the capturing elements.

Preferably, the capturing elements are configured to support the fish under the fish's own weight. Thus, there may be no need to provide a gripping means for gripping the fish with force. The fish can simply fall onto the capturing elements and remain supported by the capturing elements. Preferably, the capturing elements are configured to capture the fish at the neck. Preferably, the capturing elements are configured to capture the fish in an upright position, preferably, as soon as the fish has entered the gap and, preferably, such that a longitudinal axis of the fish is substantially perpendicular to a plane defined by longitudinal axes of the capturing elements (hereinafter referred to as a capturing elements plane for brevity). Preferably, the fish is captured between the capturing elements with its tail facing down and its head facing up. Preferably, the cutting arrangement is configured to head the fish at a neck region, such that after the head of the fish has been cut off, the fish remains captured in the capturing arrangement. Accordingly, after the head of the fish has been cut off, an opening into the fish's abdominal cavity is formed and this opening faces upwardly thereby preventing any entrails from falling from the cavity and contaminating the surroundings.

Preferably, where the capturing elements comprise feeder belts, the feeder belts are taut so as not be spread apart by the fish and not to allow the fish from the predetermined size range to slip through the feeder belts.

Preferably the cutting arrangement is disposed across the a path of movement of the fish being held by the capturing arrangement with respect to the cutting arrangement so as to cut the fish while the fish is being supported by the capturing arrangement. Preferably, the cutting arrangement is adapted to cut the fish while the fish is being transported by the capturing arrangement. Accordingly, no change of orientation of the fish is required in order to head the fish. The cutting arrangement may be adapted to draw in the fish while the fish is being supported on the capturing arrangement.

Advantageously, the capturing arrangement may comprise gripping elements between the capturing elements and the cutting arrangement for gripping the headed fish. The gripping elements preferably define a gap therebetween such that the fish received by the gripping elements from the capturing elements is received in the gap and gripped by elements. Preferably, the gap between the gripping elements is the same as the gap between the capturing elements. The gripping elements are preferably configured to grip and hold the fish, preferably at the sides of the fish, while the fish is being cut by the cutting arrangement. Preferably, the gripping elements are configured, to grip and hold the fish so as to prevent the fish from moving with respect to the gripping elements while the fish is being cut by the cutting arrangement. The gripping elements may include one or more friction members for gripping the fish.

The gripping elements may comprise a pair of substantially parallel traction belts, the traction belts being spaced apart defining the gap. The traction belts are preferably movable belts. Where the capturing elements comprise feeder belts, the traction belts may be arranged as an extension of the feeder belts. The traction belts are preferably collinear with the feeder belts.

The cutting arrangement preferably includes one or more blades for heading the fish. The one or more blades may include one or more rotating circular blades. Preferably, the cutting arrangement includes a pair of blades. The cutting arrangement may include a pair of blades, one blade at each side of a longitudinal axis of the capturing arrangement and the capturing arrangement is linearly movable in relation to the blades such that a fish passes between the blades while being supported by the capturing arrangement such that the fish's head is cut off by the blades. The or each blade preferably has a cutting plane. Where a pair of blades is provided, the cutting planes of the blades may be substantially parallel to each other. The or each cutting plane of the blades may be substantially parallel to the capturing elements plane or as the case may be, a plane defined by longitudinal axes of the gripping elements (hereinafter referred to as the gripping elements plane for brevity). Where a pair of blades is provided, the blades may be located at different heights with respect to the capturing elements plane and/or the gripping elements plane. The or each blade is preferably a rotating circular blade. Preferably, the or each blade has an axis of rotation. The axis of rotation may be substantially perpendicular to the capturing elements plane and/or the gripping elements plane. Preferably, the or each blade has a cutting edge, the cutting edge being preferably positioned across a path of movement of the fish being held by the capturing arrangement with respect to the cutting arrangement, and preferably between the capturing elements and/or between the gripping elements when viewed from above or when viewed in a plane perpendicular to the longitudinal axes of the capturing elements and/or the gripping elements. Where a pair of blades is provided, the cutting edges of the blades may overlap with each other. Where a pair of blades is provided, the blades are preferably rotatable such that their cutting edges nearest to the path of movement of the fish being held by the capturing arrangement with respect to the cutting arrangement rotate in the same direction as the direction of linear travel of the capturing arrangement relative to the blades, such that the cutting edges engage and pull in an approaching fish between the cutting edges.
Preferably, the blades are disposed relative to the capturing arrangement so as to cut the fish at the neck. A vessel may be provided beneath the or each blade for collecting fish heads.

Where the capturing elements comprise feeder belts, the feeder belts may be mounted on sheaves. The feeder belts may be endless belts. The feeder belts may be made from an elastomeric material. Where the gripping elements comprise traction belts, the traction belts may be mounted on sheaves. The traction belts may be endless belts. The traction belts may be made from an elastomeric material. The sheaves of the feeder belts and the traction belts may be common sheaves or may be individual sheaves. The sheaves may be motor driven. The motor may be an electric motor.

It will be appreciated that the term "belt" or "belts" in defining capturing elements should be afforded a broad meaning, including belt, rope, cord, line, string as well as chain or indeed other tensioning elements as long a they are spaced apart so as to capture and/or grip fish as described above.

The arrangement configured to deliver fish to the capturing elements in random orientation preferably includes a conveyor belt on which the fish is initially put in random orientation for delivering the fish onto the capturing elements. The conveyor belt may include a discharge end above the capturing elements so that the fish simply falls onto the capturing elements from the conveyor belt.

Preferably, the apparatus includes a guiding device for guiding the fish towards the capturing elements. Preferably, the guiding device comprises a funnel like arrangement with a wider end spaced away from the capturing elements and a narrower end closer to the capturing elements than the wider end. The guiding device may include a pair of directing panels spaced apart from each other and tapering towards the feeder belt. The wider end of the guiding device may be located at or about the discharge end of the conveyor belt. The guiding device may be configured to guide a plurality of fish at a time.

The apparatus preferably further comprises one or more vacuum heads for eviscerating the beheaded fish. Additionally, one or more spraying heads may be provided for washing gutted fish. One or more additional vacuum heads may be provided for vacuuming the abdominal cavity of the gutted fish after spraying.

The apparatus preferably includes a reservoir for collecting headed and gutted fish for further steps (such as skinning and boning) leading towards mincing.

The capturing elements and blade(s) are preferably capable to move at high speeds making the apparatus highly productive.

The apparatus may include a plurality of pairs of capturing elements each pair preferably being equipped with a respective cutting arrangement. Each pair of capturing elements may be arranged to receive fish from the same conveyor belt or from an individual conveyor belt.

In one arrangement, a second capturing arrangement may be provided beneath the or each first capturing arrangement, the second pair of capturing elements being arranged essentially in the same manner as the first capturing arrangement the difference being that the size of the gap between the capturing elements of the second capturing arrangement is smaller than that of the gap between the capturing elements of the first capturing arrangement and corresponds to a second predetermined range of sizes of the predetermined fish species, the sizes of the fish in the second range being smaller than the gap between the capturing elements of the first capturing arrangement so that fish which does not become captured by the capturing elements of the first capturing arrangement falls through the gap between the capturing elements of the first capturing arrangement and becomes received in the gap between the capturing elements of the second capturing arrangement and captured between the capturing elements of the second capturing arrangement.

The apparatus of the invention renders processing of boarfish and other similar fish time- and cost-efficient as well as ensures high quality of processed end product (e.g. mince) by providing for proper heading and eviscerating by minimizing and/or eliminating contamination of the eventual mince by traces of fish head and entrails.

It will be appreciated that, although the invention has been provided for the purpose of processing boarfish, the apparatus of the present invention is suitable for processing any species of fish which has an enlarged head profile compared to the rest of the body in plan view or a thickening along the fish body such that the fish can be captured between the capturing elements in the same position regardless of the orientation in which the fish was delivered to the capturing elements.

According to a second aspect there is provided a method according to claim 10 of processing fish, the method comprising the steps of
providing an apparatus in accordance with the first aspect of the invention;
delivering fish to the capturing elements of the apparatus; and
causing the fish to be received in the gap and captured between the capturing elements, the capturing elements preventing the fish from passing through and out of the gap between the capturing elements.
The method may include capturing a plurality of fish at a time on the capturing elements so that the fish is spaced apart from each other along the gap.
Preferably, the method includes the step of heading the fish captured between the capturing elements by means of a cutting arrangement, preferably provided at a location along the capturing elements. Preferably, the method includes moving the capturing elements so as to deliver the captured fish to the cutting arrangement.

The fish may be boarfish. Advantageously, the first pair of capturing elements may comprise a pair of substantially parallel feeder belts the feeder belts being spaced apart defining the gap. The feeder belts are preferably movable belts.

The method may include delivering fish to the capturing elements in random orientation.

The method includes allowing the fish to enter the gap between the capturing elements (which may be head first, tail first, sideways or indeed at any angle in relation to the feeder belts) and to become gets caught between the capturing elements wherein laterally protruding bones at the neck of the fish serve as a ledge which catches on the capturing elements and prevents the fish from passing through the capturing elements. The method may include allowing the rear part of the fish (i.e. the part between the neck and the tail) to pass through the gap between the capturing elements whereas the head remains captured by the capturing elements, preferably at the neck. Therefore, the method includes capturing the fish by means of the capturing elements in the same orientation regardless of the orientation in which the fish was delivered to the capturing elements. The method preferably includes delivering the fish in the same orientation to the cutting arrangement which cuts off the head of the fish.

Preferably, the method includes supporting the fish on the capturing elements under the fish's own weight. The method may include allowing the fish to fall onto the capturing elements from a location above the capturing elements and to remain supported by the capturing elements. Preferably, the method includes capturing the fish at the neck by the capturing elements. Preferably, the method includes capturing the fish in an upright position by the capturing elements, preferably, as soon as the fish has entered the gap and, preferably, such that a longitudinal axis of the fish is substantially perpendicular to a plane defined by longitudinal axes of the feeder belts (hereinafter referred to as a capturing elements plane for brevity). Preferably, the method includes capturing the fish between the capturing elements with its tail facing down and its head facing up. Preferably, the method includes heading the fish at a neck region by the cutting arrangement, such that after the head of the fish has been cut off, the fish remains captured in the capturing arrangement. The method preferably includes forming an opening into the fish's abdominal cavity upon cutting off the fish's head the opening facing upwardly thereby preventing any entrails from falling from the cavity and contaminating the surroundings.

Preferably, where the capturing elements comprise feeder belts, the method includes keeping the feeder belts taut so as not to allow the feeder belts to be spread apart by the fish and not to allow the fish to slip through the feeder belts.

Preferably, the method includes disposing the cutting arrangement across the a path of movement of the fish being held by the capturing arrangement with respect to the cutting arrangement and heading the fish by the cutting arrangement while the fish is being supported on the capturing arrangement. Preferably, the method includes heading the fish by the cutting arrangement while the fish is being transported by the capturing arrangement. Preferably, the method includes configuring the cutting arrangement so that the cutting arrangement draws in the fish while the fish is being supported on the capturing arrangement.

Advantageously, the method may include providing the capturing arrangement with gripping elements between the capturing elements and the cutting arrangement and gripping the headed by the gripping elements. The method preferably includes receiving the fish in a gap defined between the gripping elements and gripping the fish by the gripping elements. Preferably, the gap between the gripping elements is the same as the gap between the capturing elements. The gripping elements preferably grip and hold the fish, preferably at the sides of the fish, while the fish is being cut by the cutting arrangement. Preferably, the gripping elements grip and hold the fish so as to prevent the fish from moving with respect to the gripping elements while the fish is being cut by the cutting arrangement. The gripping elements may include one or more friction members for gripping the fish.

The method may include providing the gripping elements as a pair of substantially parallel traction belts, the traction belts being spaced apart defining the gap. The traction belts are preferably movable belts. Where the capturing elements comprise feeder belts, the method may include arranging the traction belts as an extension of the feeder belts. The method may include arranging the traction belts collinearly with the feeder belts.

The method preferably includes providing one or more blades for heading the fish, wherein the one or more blades may include one or more rotating circular blades. The method may include providing a pair of blades, one blade at each side of a longitudinal axis of the capturing arrangement and moving the capturing arrangement linearly in relation to the blades such that a fish passes between the blades while being supported by the capturing arrangement such that the fish's head is cut off by the blades. The method may include providing a pair of blades and locating the blades at different heights with respect to the capturing elements plane. The or each blade may be a rotating circular blade. Preferably, the method includes arranging an axis of rotation of the or each blade substantially perpendicular to the capturing elements plane and/or the gripping elements plane. Preferably, the method includes providing the or each blade with a cutting edge, and positioning the cutting edge in a path of movement of the fish being held by the capturing arrangement with respect to the cutting arrangement. The method may include providing a blade at each capturing element such that cutting edges of the blades overlap with each other. The method preferably includes rotating the blades such that their cutting edges a path of movement of the fish being held by the capturing arrangement with respect to the cutting arrangement rotate in the same direction as the direction of linear travel of the capturing arrangement relative to the blades, such that the cutting edges engage and pull in an approaching fish between the cutting edges. Preferably, the method includes disposing the blades relative to the capturing arrangement so as to cut the fish at the neck. The method may include providing a vessel beneath the or each blade for collecting fish heads.

Where the capturing elements comprise feeder belts, the method may include mounting the feeder belts on sheaves.. Where the gripping elements comprise traction belts, the method may include mounting the traction belts on sheaves. The method may include providing the feeder belts as endless belts and, optionally, making the feeder belts from an elastomeric material. The method may include providing the traction belts as endless belts and, optionally, making the traction belts from an elastomeric material. The method may include driving the sheaves by a motor, which may be an electric motor. The sheaves of the feeder belts and the traction belts may be common sheaves or may be individual sheaves.

The method may include providing a conveyor belt, putting the fish on the conveyor in random orientation and delivering the fish onto the capturing elements by the conveyor belt. The method may include forming the conveyor belt with a discharge end above the capturing elements so that the fish is allowed to fall onto the capturing elements from the conveyor belt.

Preferably, the method includes providing a guiding device and guiding the fish towards the capturing elements by the guiding device. The method may include using the guiding device to direct the fish from the conveyor belt to the capturing elements. The method may include guiding a plurality of fish at a time through the guiding device.

The method preferably further comprises the step of eviscerating the beheaded fish by one or more vacuum heads. Additionally, the method may include washing gutted fish using one or more spraying heads. The method may include vacuuming the abdominal cavity of the gutted fish after spraying by one or more additional vacuum heads.

The method preferably includes collecting headed and gutted fish for further steps (such as skinning and boning) leading towards mincing.

The method may include providing a plurality of pairs of feeder belts each pair preferably being equipped with a respective cutting arrangement. The method may include arranging each pair of capturing elements to receive fish from the same conveyor belt or from an individual conveyor belt.

The method may include providing a second capturing arrangement beneath the or each first capturing arrangement, the second capturing arrangement being arranged essentially in the same manner as the first capturing arrangement the difference being that the size of the gap between the capturing elements of the second capturing arrangement is smaller than that of the gap between the capturing elements of the first capturing arrangement and corresponds to a second predetermined range of sizes of the predetermined fish species, the sizes of the fish in the second range being smaller than the gap between the capturing elements of the first capturing arrangement wherein the method includes allowing fish which does not become captured by the capturing elements of the first capturing arrangement fall through the gap between the capturing elements of the first capturing arrangement and receiving the said fish in the gap between the capturing elements of the second capturing arrangement and capturing the said fish between the capturing elements of the second pair capturing arrangement.

All essential, preferred or optional features or steps of the first aspect of the invention can be provided in conjunction with the features of the second aspect of the invention and vice versa where appropriate.

The present invention provides a fish processing apparatus and a corresponding method as defined in the appended claims.

### Detailed Description of the Invention

Exemplary embodiments of the invention will now be described in more detail with reference to the accompanying drawings. In the drawings:
Figure 1 is a schematic plan view of a feeder belt arrangement of the apparatus of the present invention;
Figure 2 is a cross-sectional view along the lines A-A in Figure 1 of the feeder belt arrangement of Figure 1;
Figure 3 is a plan view of the apparatus of the present invention in accordance with one layout;
Figure 4 is an enlarged area X of Figure 3;
Figure 5 is a partial plan view of the apparatus of the present invention in accordance with a further layout;
Figure 6 is an end view of the apparatus of Figure 5; and
Figure 7 is a side view of the apparatus of Figure 5.

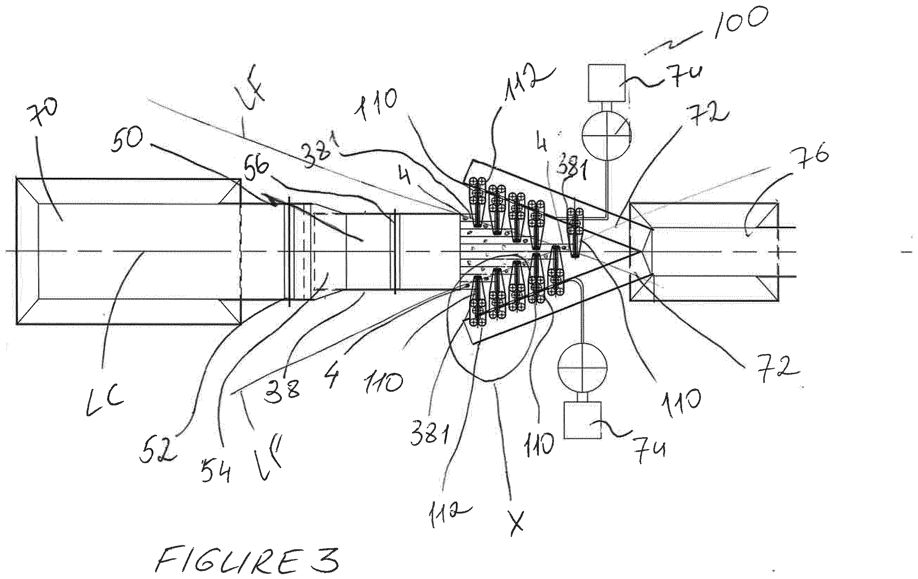

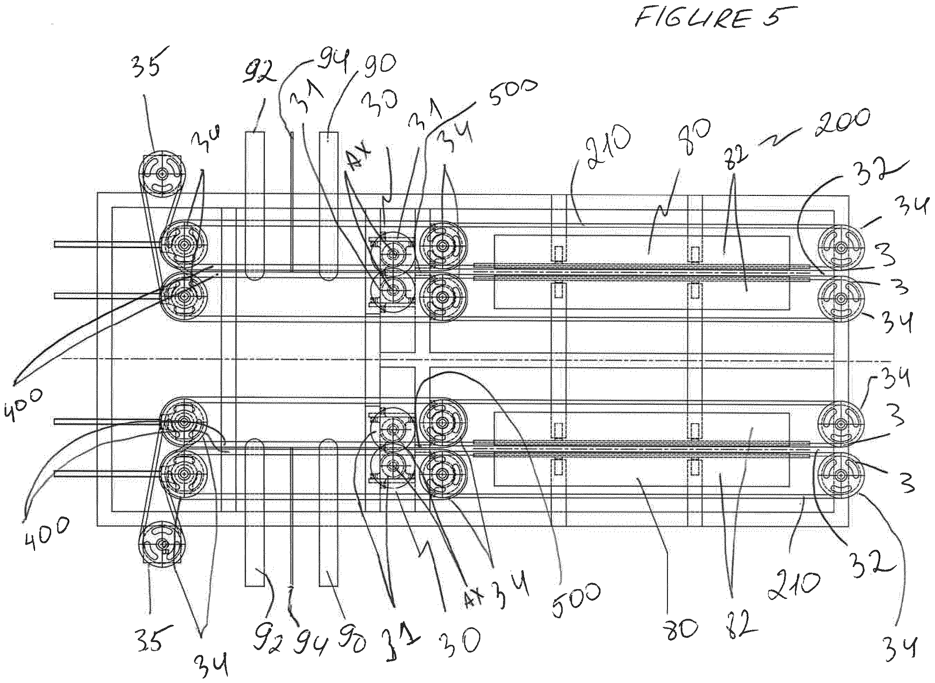

An apparatus in accordance with the invention is indicated generally by reference numeral 100 in Figure 3 and 200 in Figures 5 to 7. The apparatuses 100 and 200 are similar in most respects and differ only in some aspects of layout. Therefore, in the description below, like parts of the apparatus 100, 200 have been indicated using the same or like reference numerals.

It will be appreciated that, although the apparatus and method of invention have been provided for the purpose of processing boarfish, the apparatus and method of the present invention are suitable for processing any species of fish which has an enlarged head profile compared to the rest of the body in plan view or a thickening along the fish body such that the fish can be captured between capturing elements of the apparatus in the same position regardless of the orientation in which the fish was delivered to the feeder belts.

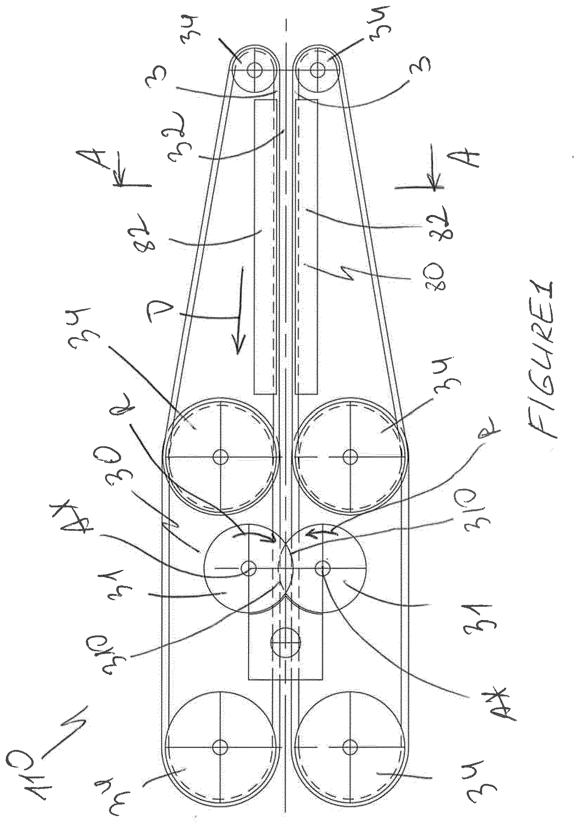

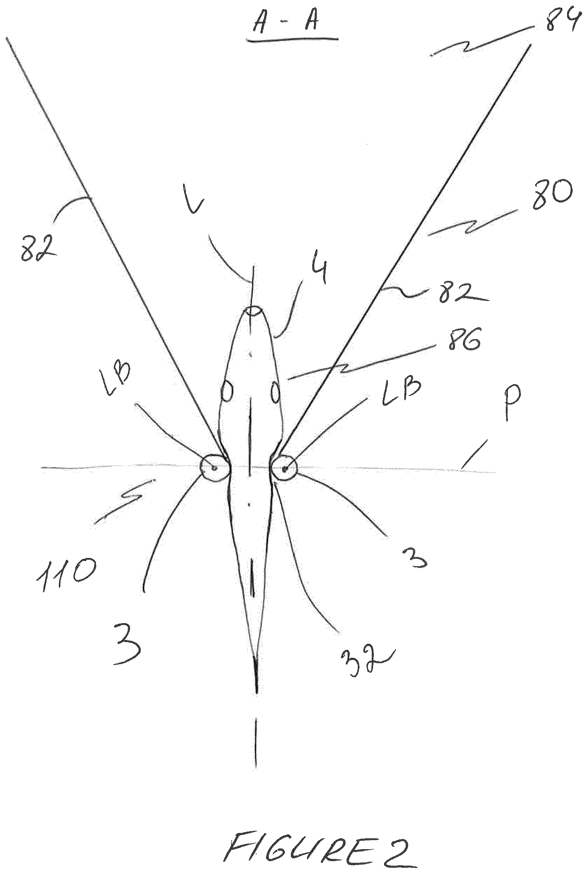

Referring initially jointly to Figures 1 to 7, the apparatus 100, 200 includes several capturing arrangements or feeder arrangements 110, 210 including a first pair of substantially parallel capturing elements advantageously provided in the form of feeder belts 3. The feeder belts 3 are spaced apart defining a gap 32 therebetween. The size of the gap 32 corresponds to a predetermined range of sizes of a predetermined fish species (such as boarfish) so that upon delivery of the fish 4 (see Figure 2) to the feeder belts 3, the fish 4 is partially received in the gap 32 and captured between the feeder belts 3 whereby the feeder belts 3 prevent the fish 4 from falling through the gap 32 between the feeder belts 3 and also always orient the fish 4 into the same position irrespective of the orientation in which the fish 4 was delivered to the feeder belts 3. The feeder belts 3 may be configured to capture a plurality of fish 4 at a time so that the fish 4 are spaced apart from each other along the gap 32.

The feeder belts 3 are endless and are mounted on and movable by sheaves 34. The sheaves 34 are preferably driven by respective electric motors 35. The feeder belts 34 may be made from an elastomeric material. It will be appreciated that the term "belt" or "belts" in the present invention has been assigned a broad meaning such that belts 3 may be provided in the form of belt, rope, cord, line, string as well as chain, or any other tensioning elements as long a they are spaced so as to capture fish as described above.

Preferably, the apparatus 100, 200 comprises a cutting arrangement 30 provided at a location along the feeder belts 3 in the form of a pair of circular rotating blades 31 for heading the fish 4 captured between the feeder belts 3. The feeder belts 3 are movable by the sheaves 34 so as to deliver the captured fish 4 to the cutting arrangement 30.

When viewed from above along the spine (see for example Figure 2), boarfish has a thicker head and a thinner body. This is due to the bones at the neck on either side of the boarfish protruding laterally of the body of the boarfish. These bones are rigid and cannot be easily displaced or compressed towards each other. Thus, when the boarfish is delivered to the feeder belts 3, in any orientation, the boarfish enters the gap 32 between the feeder belts 3 (which may be head first, tail first, sideways or indeed at any angle in relation to the feeder belts 3) but gets caught between the feeder belts 3 because the thicker head of the boarfish cannot pass between the feeder belts 3. The bones at the neck serve as a ledge which catches on the feeder belts 3 and prevents the boarfish from passing through the feeder belts 3. The rear part of the boarfish (the part between gills and tail) is slightly heavier and therefore the rear part of the boarfish always passes through the gap 32 between the feeder belts 3 whereas the head remains captured by the feeder belts 3 at the neck. Therefore, the boarfish gets captured by the feeder belts 3 always in the same orientation regardless of the orientation in which the boarfish was delivered to the feeder belts 3. Thus, the boarfish is delivered to the cutting arrangement 30 which cuts off the head of the boarfish always in the same orientation. It will be appreciated that the fish need not necessarily be boarfish but may indeed by any other species which have a thickening along their bodies which allows the fish to be captured between the feeder belts 3 in the same orientation regardless of the orientation in which the fish 4 has been delivered to the feeder belts 3.

The feeder belts 3 are configured to support the fish 4 under the fish's own weight. The fish 4 can simply fall onto the feeder belts 3 and remain supported by the feeder belts 3. As shown in Figure 2, the feeder belts may be configured to capture the fish 4 at the neck. The feeder belts 3 are also configured to capture the fish 4 in an upright position, as soon as the fish has entered the gap, such that a longitudinal axis L of the fish is substantially perpendicular to a plane P defined by longitudinal axes LB of the feeder belts 3 (hereinafter referred to as a feeder belt plane P for brevity). The fish 4 is captured between the feeder belts 3 with its tail facing down and its head facing up. The cutting arrangement 30 is configured to head the fish 4 at a neck region such that after the head of the fish 4 has been cut off, the fish 4 remains captured in the capturing arrangement. Accordingly, after the head of the fish 4 has been cut off, an opening (not shown) into the fish's abdominal cavity is formed and this opening faces upwardly thereby preventing any entrails from falling from the cavity and contaminating the surroundings while the fish 4 is being transferred towards a point at which the fish 4 is eviscerated, i.e. to the cutting arrangement 30.

The feeder belts 3 are taut on the sheaves 34 sufficiently so as not be spread apart by the fish 4 and not to allow the fish 4 from a predetermined size range to slip through the feeder belts 3.

The cutting arrangement 30 is disposed across the feeder belts 3 so as to cut the fish 4 while the fish 4 is being supported on the feeder belts 3. The cutting arrangement 30 is adapted to cut the fish 4 while the fish 4 is being transported by the feeder belts 3. Accordingly, no change of orientation of the fish 4 is required in order to head the fish 4. The cutting arrangement 30 is adapted to draw in the fish 4 (as will be described below in more detail) while the fish is 4 being supported on the feeder belts 3.

As shown in Figure 5, the feeder arrangement 110, 210 may comprise gripping elements provided in the form of traction belts 400 extending from the feeder belts towards and beyond the cutting arrangement 30 collinearly with the feeder belts 3. The traction belts 400 define a gap 500 therebetween such that the fish 4 received by the traction belts 400 from the feeder belts 3 is received in the gap 500 and gripped by the traction belts 400. The gap 500 between the traction belts 400 may be the same as the gap 32 between the feeder belts 3. The traction belts 400 are configured to grip and hold the fish 4 at the sides of the fish 4 to prevent the fish 4 from moving with respect to the traction belts 400 while the fish 4 is being cut by the cutting arrangement 30. The traction belts 400 may include one or more friction members for gripping the fish 4. The traction belts 400 may be mounted on the same sheaves 34 (plus some additional sheaves 34) and be driven by the same motor 35 as that driving the feeder belts 3.

The cutting arrangement 30 includes a pair of rotating circular blades 31, one blade 31 at each belt 3. The feeder belts 3 are linearly movable in relation to the blades 31 such that a fish 4 passes between the blades 31 while being supported by the feeder belts 3 such that the fish's head is cut off by the blades 31. Each blade 31 has a cutting plane (not indicated by a numeral) and the cutting planes of the blades 31 are substantially parallel to each other to the feeder belt plane P. Although not apparent from the drawings, the blades 31 are located at different heights with respect to the feeder belt plane P. Each blade has an axis AX of rotation which is substantially perpendicular to the feeder blade plane P. Each blade 31 has a cutting edge 310 positioned between the feeder belts 3 when viewed from above or when viewed in a plane perpendicular to the longitudinal axes LB of the feeder belts 3. The cutting edges 310 of the blades 31 overlap with each other. The blades 31 are preferably rotatable such that their cutting edges 310 nearest to the respective belts 3 rotate in the same direction (indicated by arrows R in Figure 1) as the direction D (Figure 1) of linear travel of the feeder belts 3 relative to the blades 31, such that the cutting edges 310 engage and pull in an approaching fish 4 between the cutting edges 310, to facilitate cutting without the need to grip and hold the fish 4 by a separate device while the fish 4 is being cut. The blades 31 are disposed relative to the feeder belts 3 so as to cut the fish 4 at the neck. A vessel (not shown) may be provided beneath the or each cutting arrangement 30 for collecting fish heads.

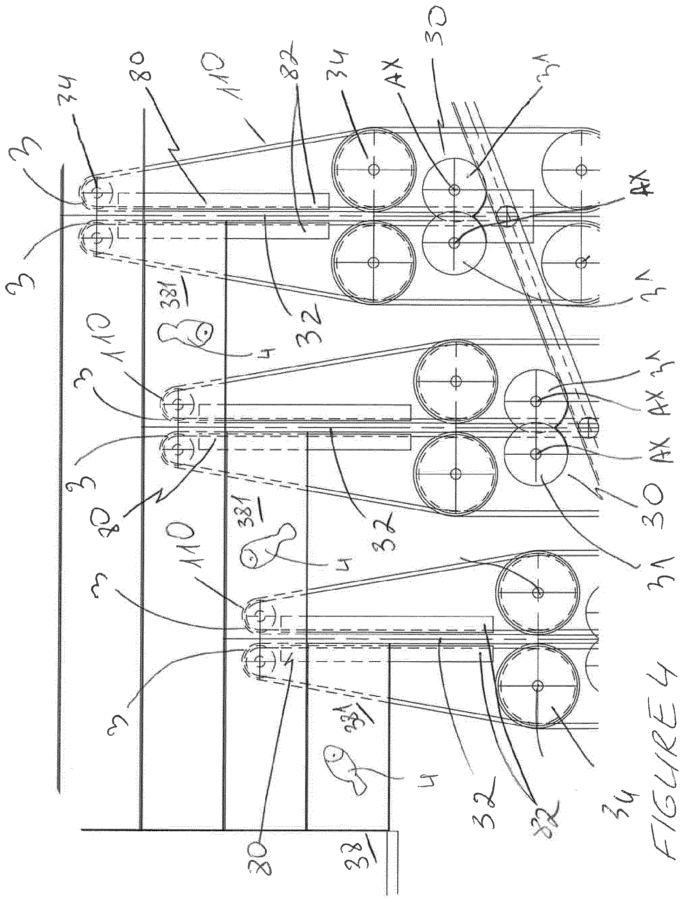

Referring to Figures 3 and 4, the apparatus 100, 200 includes an arrangement configured to deliver fish 4 to the feeder belts 3 in random orientation and, preferably, to drop the fish onto the feeder belts 3 from a location above the feeder belts 3. The arrangement may comprise a conveyor belt 38 (not shown in Figures 5 to 7) on which the fish 4 is initially put in a random orientation for delivering the fish 4 to the feeder arrangements 110, 210 and onto the feeder belts 3 so that the fish 4 simply falls onto the feeder belts 3 from the conveyor belt 38. In the embodiment of Figures 3 and 4, the conveyor belt 38 includes a plurality of respective discharge ends 381 above the feeder belts 3 of each feeder arrangement 110 and the fish 4 simply falls onto the feeder belts 3 from the discharge ends 381. The discharge ends 381 are disposed along lines LF diagonal to a longitudinal axis LC of the conveyor belt 38 at each longitudinal side of the conveyor belt 38 and the lines LF converge in the direction of travel of the conveyor belt 38. A spreader arrangement 50 is provided along the conveyor belt 38 for distributing fish 4 to the plurality of the discharge ends 381. The spreader arrangement 50 includes a first spreader device 52 for roughly spreading the fish 4 on the conveyor belt 38 when the fish 4 is dispensed onto the conveyor belt 38 from a bulk storage hopper 70. The roughly spread fish 4 then passes through a vibration mechanism 54 which further distributes the fish 4 across the conveyor belt 38 and through a second spreader device 56 which completes the spreading operation. As described above, once the fish 4 is captured by the feeder belts 3 (always in the same orientation regardless of the orientation in which the fish 4 was positioned on the conveyor belt 38) the fish 4 is transferred by the feeder belts 3 to the respective cutting arrangements 30 where the fish 4 is headed. Fish heads are collected in suitable vessels (not shown) underneath the cutting arrangements 30. The headed fish 4 is transferred on the feeder belts 3 to respective vacuum heads (not shown in Figures 3 and 4) which are operated by respective vacuum pumps 74 and the fish 4 is eviscerated by vacuuming the entrails from the opening formed in the fish 4 after the fish's head has been cut off. The headed and eviscerated fish 4 is then collected in respective chutes 72, The cutes 72 are provided at each longitudinal side of the conveyor belt 38 and positioned underneath rear ends 112 of the feeder arrangements 110 so that the two chutes 72 converge towards a collector hopper 76 provided downstream the feeder arrangements 110. From the collector hopper 76 the fish 4 is transferred to another piece of equipment for skinning and boning prior to mincing which can be accomplished using known commercially available machines. The provision of multiple feeder arrangements 110, 210 and providing multiple conveyor belts 38 and/or multiple discharge ends 381 significantly increases the capacity of the apparatus 100, 200 of the invention.

As best shown in Figure 2, the apparatus includes a guiding device 80 for guiding the fish 4 from the conveyor belt 38 towards the feeder belts 3. The guiding device 80 comprises a funnel like arrangement of a pair of directing panels 82 spaced apart from each other and tapering towards the feeder belts 3 defining a wider upper end 84 spaced away from the feeder belts 3 and a narrower lower end 86. The wider upper end 84 of the guiding device 80 is located at the discharge end 381 of the conveyor belt 38 and the narrower lower end 86 is located immediately above the feeder belts 3.

As mentioned above, the apparatus 100, 200 further comprises first and second vacuum heads 90, 92 (shown in Figures 5 to 7) provided at each feeder arrangement 110, 210 for eviscerating the beheaded fish 4. A first vacuum head 90 eviscerates the fish 4 after the fish 4 has been headed. A spraying head 94 is provided between the vacuum heads 90, 92 for washing gutted fish 4. A second additional vacuum head 92 is provided for vacuuming the abdominal cavity of the gutted fish 4 after spraying to remove remaining traces of entrails and to dry the fish 4.

The feeder belts 3 and blades 31 can move at very high speeds making the apparatus 100, 200 highly productive.

It will be appreciated that each feeder arrangement 110, 210 may be arranged to receive fish 4 from the same conveyor belt 38 or from respective individual conveyor belts.

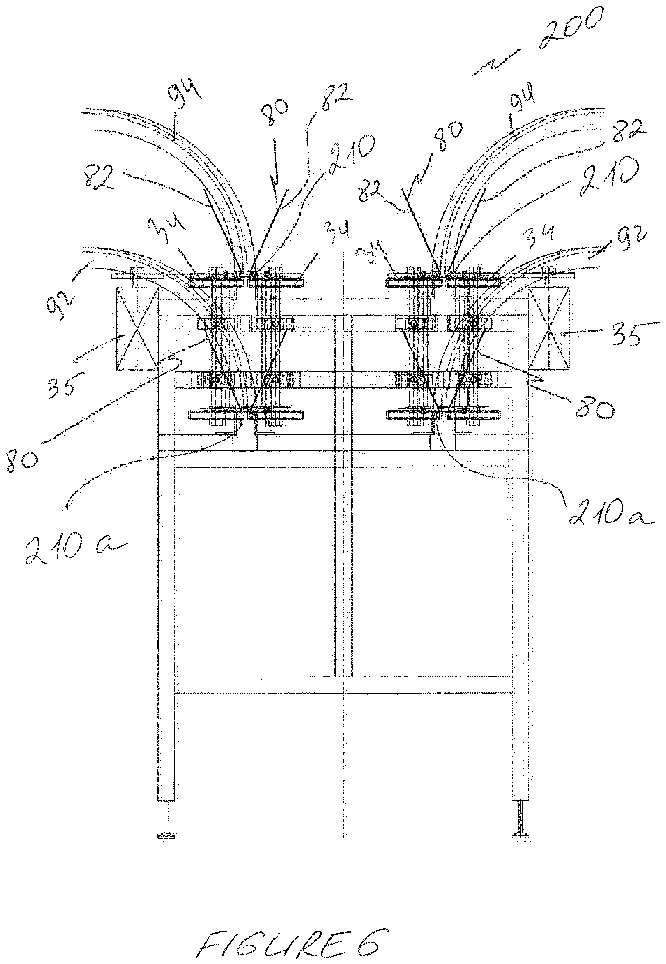

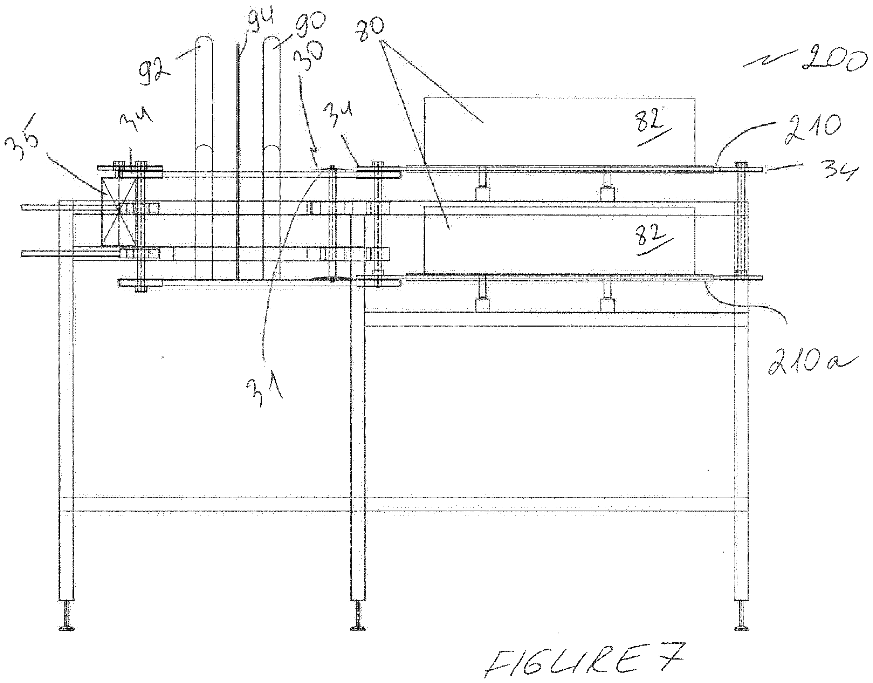

As shown in Figures 6 and 7 a second feeder arrangement 210a is provided beneath each first feeder arrangement 210. The second feeder arrangement 210a is arranged essentially in the same manner as the first feeder arrangement 210, the difference being that the size of gap 32a between feeder belts 3a of the second feeder arrangement 210a is smaller than that of the gap 32 between the feeder belts 3 of the first feeder arrangement 210. The size of the gap 32a corresponds to a second predetermined range of sizes of the predetermined fish species, the sizes of the fish in the second range being smaller than the gap 32 between the feeder belts 3 of the first feeder arrangement 210. Accordingly, fish 4, which does not become captured by the feeder belts 3 of first feeder arrangement 210, falls through the gap 32 between the feeder belts 3 of the first feeder arrangement 210 and becomes partially received in the gap 32a between the feeder belts 3a of the second feeder arrangement 210a and captured between the feeder belts 3a.

The apparatus 100, 200 of the invention renders processing of boarfish and other similar fish time- and cost-efficient as well as ensures high quality of processed end product (e.g. mince) by providing for proper heading and eviscerating by minimizing and/or eliminating contamination of the eventual mince by traces of fish head and entrails.

Modifications are possible within the scope of the present invention as defined in the appended claims.

## Claims

1. A fish (4) processing apparatus (100, 200) for processing fish that has a thickening along its body, the apparatus comprising
a first capturing arrangement (110, 210) comprising a first pair of capturing elements (3), the capturing elements being spaced apart defining a gap (32) therebetween, the size of the gap corresponding to a predetermined range of sizes of a predetermined fish species so that upon delivery of the fish to the capturing elements, the fish is received in the gap and captured between the elements, the elements and the thickening preventing the fish from passing through and out of the gap between the elements;
wherein in use the capturing elements are operable to capture the fish in an upright position as soon as the fish has entered the gap (32);
**characterized in that** the apparatus comprises an arrangement configured to deliver fish to the capturing elements in random orientation.

2. A fish processing apparatus as claimed in claim 1, wherein the capturing elements are movable capturing elements such as to function as both a capturing device and a transfer device;
optionally, wherein the capturing elements are configured to support the fish under the fish's own weight such that the fish can fall onto the capturing elements and remain supported by the capturing elements;
optionally, wherein the capturing elements are configured to capture the fish at the neck;
optionally, wherein the capturing elements are configured to capture therebetween the fish with its tail facing down and its head facing up;
optionally, wherein the first pair of capturing elements comprises a pair of substantially parallel feeder belts (3) the feeder belts being spaced apart defining the gap;
optionally, wherein the apparatus comprises one or more vacuum heads (90, 92) for eviscerating beheaded fish;
optionally, wherein one or more spraying heads (94) are provided for washing eviscerated fish;
optionally, wherein a second capturing arrangement (210a) is provided beneath the or each first capturing arrangement, having a second pair of capturing elements arranged essentially in the same manner as the first capturing arrangement the difference being that the size of the gap (32a) between the capturing elements of the second capturing arrangement is smaller than that of the gap (32) between the capturing elements of the first capturing arrangement and corresponds to a second predetermined range of sizes of the predetermined fish species, the sizes of the fish in the second range being smaller than the gap between the capturing elements of the first capturing arrangement so that fish which does not become captured by the capturing elements of the first capturing arrangement falls through the gap between the capturing elements of the first capturing arrangement and becomes received in the gap between the capturing elements of the second capturing arrangement and captured between the capturing elements of the second capturing arrangement;
optionally, wherein the capturing elements are configured to capture a plurality of fish at a time so that the fish are spaced apart from each other along the gap; and
optionally, wherein the fish is boarfish.

3. A fish processing apparatus as claimed in claim 1 or claim 2 wherein the apparatus comprises a cutting arrangement (30) for heading the fish captured between the capturing elements;
optionally, wherein the cutting arrangement is configured to head the fish at a neck region such that after the head of the fish has been cut off, the fish remains captured in the capturing arrangement and an opening into the fish's abdominal cavity is formed and this opening faces upwardly.

4. A fish processing apparatus as claimed in claim 3, wherein the capturing arrangement comprises gripping elements provided between the capturing elements and the cutting arrangement for gripping and holding the headed fish at the sides of the fish, wherein the gripping elements define a gap therebetween such that the fish is received from the capturing elements in the gap and gripped by the gripping elements;
optionally, wherein the gripping elements comprise a pair of substantially parallel traction belts (400), the traction belts being spaced apart defining the gap.

5. A fish processing apparatus as claimed in claim 3 or claim 4, wherein the cutting arrangement includes one or more blades for heading the fish.

6. A fish processing apparatus as claimed in claim 5, wherein the cutting arrangement includes a pair of blades;
wherein the blades include rotating circular blades (31);
wherein at least one blade is provided at each side of a longitudinal axis of the capturing arrangement and the capturing arrangement is linearly movable in relation to the blades such that a fish passes between the blades while being supported by the capturing arrangement such that the fish's head is cut off by the blades;
wherein each blade has a cutting edge (310) positioned across a path of movement, with respect to the cutting arrangement, of the fish being held by the capturing arrangement; and
wherein the blades are rotatable such that their cutting edges nearest to the path of movement, with respect to the cutting arrangement, of the fish being held by the capturing arrangement rotate in the same direction as the direction of linear travel of the capturing arrangement relative to the blades, such that the cutting edges engage and pull in an approaching fish between the cutting edges.

7. A fish processing apparatus as claimed in any preceding claim, wherein the arrangement configured to deliver fish to the capturing elements in random orientation is configured to drop the fish onto the capturing elements from a location above the capturing elements.

8. A fish processing apparatus as claimed in any preceding claim, wherein the arrangement configured to deliver fish to the capturing elements in random orientation includes a conveyor belt (38) on which the fish is initially put in random orientation for delivering the fish onto the capturing elements;
optionally, wherein the conveyor belt includes a discharge end (381) above the capturing elements so that the fish falls onto the capturing elements from the conveyor belt.

9. A fish processing apparatus as claimed in claim 7 or 8, wherein the apparatus includes a guiding device (80) for guiding the fish towards the capturing elements;
optionally, wherein the guiding device comprises a funnel like arrangement with a wider end (84) spaced away from the capturing elements and a narrower end (86) closer to the capturing elements than the wider end, wherein the wider end is located at or about the discharge end of the conveyor belt.

10. A method of processing fish (4) that has a thickening along its body, the method comprising the steps of
providing an apparatus (100, 200) according to claim 1 comprising a first capturing arrangement (110, 210) comprising a first pair of capturing elements (3), the capturing elements being spaced apart defining a gap (32) therebetween, the size of the gap corresponding to a predetermined range of sizes of a predetermined fish species;
delivering fish to the capturing elements of the apparatus; and
causing the fish to be received in the gap and captured between the capturing elements, the capturing elements and the thickening preventing the fish from passing through and out of the gap between the capturing elements;
capturing the fish in an upright position by the capturing elements as soon as the fish has entered the gap; and
wherein the method includes the step of delivering fish to the capturing elements in random orientation.

11. A method of claim 10, wherein the method includes moving the capturing elements;
optionally, the method comprising the step of capturing a plurality of fish at a time on the capturing elements so that the fish is spaced apart from each other along the gap;
optionally, wherein the method includes allowing the fish to enter the gap between the capturing elements and to become caught between the capturing elements wherein laterally protruding bones at the neck of the fish serve as a ledge which catches on the capturing elements and prevents the fish from passing through the capturing elements, the method including allowing a rear part of the fish to pass through the gap between the capturing elements whereas the head remains captured by the capturing elements such that the fish is always captured in the same orientation regardless of the orientation in which the fish was delivered to the capturing elements;
optionally, wherein the method includes supporting the fish on the capturing elements under the fish's own weight;
optionally, wherein the method includes allowing the fish to fall onto the capturing elements from a location above the capturing elements and to remain supported by the capturing elements;
optionally, wherein the method includes capturing the fish at the neck by the capturing elements;
optionally, wherein the method includes capturing the fish between the capturing elements with its tail facing down and its head facing up;
optionally, wherein the method includes washing eviscerated fish using one or more spraying heads (94);
optionally, wherein the first pair of capturing elements is provided as a pair of substantially parallel feeder belts (3) the feeder belts being spaced apart defining the gap (32); and
optionally, wherein the fish is boarfish.

12. A method of claim 10 or claim 11, wherein the method includes the step of heading the fish captured between the capturing elements by means of a cutting arrangement (30);
optionally, wherein the method includes heading the fish at a neck region by the cutting arrangement such that after the head of the fish has been cut off, the fish remains captured in the capturing arrangement;
optionally, the method including forming an opening into the fish's abdominal cavity upon cutting off the fish's head the opening facing upwardly thereby preventing any entrails from falling from the cavity and contaminating the surroundings.

13. A method of claim 12, wherein the method includes providing one or more blades as the cutting arrangement for heading the fish;
optionally, wherein the one or more blades include rotating circular blades (31) and the method includes providing one blade at each side of a longitudinal axis of the capturing arrangement and moving the capturing arrangement linearly in relation to the blades such that a fish passes between the blades while being supported by the capturing arrangement such that the fish's head is cut off by the blades; and rotating the blades such that their cutting edges (310) rotate in the same direction as the direction of linear travel of the capturing arrangement relative to the blades such that the cutting edges engage and pull in an approaching fish between the cutting edges.

14. A method of any one of claims 10 to 13, wherein the method includes providing a conveyor belt (38), putting the fish on the conveyor belt in random orientation and delivering the fish onto the capturing elements by the conveyor belt;
optionally, wherein the method includes forming the conveyor belt with a discharge end (381) above the capturing elements so that the fish is allowed to fall onto the capturing elements from the conveyor belt;
optionally, wherein the method includes providing a guiding device (80) and guiding the fish towards the capturing elements by the guiding device.

15. A method of any one of claims 10 to 14, wherein the method includes the step of eviscerating the beheaded fish by one or more vacuum heads (90, 92).

## Patentansprüche

1. Eine Vorrichtung (100, 200) zum Verarbeiten von Fisch (4), um Fisch zu verarbeiten, der eine Verdickung entlang seines Körpers aufweist, wobei die Vorrichtung Folgendes beinhaltet:
eine erste Fassanordnung (110, 210), die ein erstes Paar von Fasselementen (3) beinhaltet,
wobei die Fasselemente beabstandet sind und einen Zwischenraum (32) dazwischen definieren, wobei die Größe des Zwischenraums mit einem vorbestimmten Bereich von Größen einer vorbestimmten Fischspezies korrespondiert, sodass der Fisch bei der Zuführung des Fisches zu den Fasselementen in dem Zwischenraum aufgenommen und zwischen den Elementen gefasst wird, wobei die Elemente und die Verdickung verhindern, dass der Fisch durch den und aus dem Zwischenraum zwischen den Elementen gelangt;
wobei die Fasselemente bei der Nutzung wirksam sind, um den Fisch in einer senkrechten Position zu fassen, sobald der Fisch in den Zwischenraum (32) hineingelangt ist;
**dadurch gekennzeichnet, dass** die Vorrichtung eine Anordnung beinhaltet, die ausgestaltet ist, um den Fisch den Fasselementen in einer zufälligen Ausrichtung zuzuführen.

2. Fischverarbeitungsvorrichtung gemäß Anspruch 1, wobei die Fasselemente bewegliche Fasselemente sind, sodass sie sowohl als Fasseinrichtung als auch als Überführungseinrichtung fungieren;
wobei optional die Fasselemente ausgestaltet sind, um den Fisch unter dem Eigengewicht des Fisches zu tragen, sodass der Fisch auf die Fasselemente fallen und von den Fasselementen weiterhin getragen werden kann;
wobei optional die Fasselemente ausgestaltet sind, um den Fisch am Hals zu fassen; wobei optional die Fasselemente ausgestaltet sind, um den Fisch dazwischen zu fassen, wobei sein Schwanz nach unten und sein Kopf nach oben gerichtet ist;
wobei optional das erste Paar von Fasselementen ein Paar von im Wesentlichen parallelen Aufgabebändern (3) beinhaltet, wobei die Aufgabebänder beabstandet sind und den Zwischenraum definieren;
wobei optional die Vorrichtung einen oder mehrere Vakuumköpfe (90, 92) zum Ausnehmen von geköpftem Fisch beinhaltet;
wobei optional ein oder mehrere Sprühköpfe (94) zum Waschen von ausgenommenem Fisch vorgesehen sind;
wobei optional eine zweite Fassanordnung (210a) unterhalb der oder jeder ersten Fassanordnung vorgesehen ist und ein zweites Paar von Fasselementen aufweist, die im Wesentlichen genauso angeordnet sind wie die erste Fassanordnung, jedoch mit dem Unterschied, dass die Größe des Zwischenraums (32a) zwischen den Fasselementen der zweiten Fassanordnung kleiner ist als diejenige des Zwischenraums (32) zwischen den Fasselementen der ersten Fassanordnung und mit einem zweiten vorbestimmten Bereich von Größen der vorbestimmten Fischspezies korrespondiert, wobei die Größen des Fisches in dem zweiten Bereich kleiner sind als der Zwischenraum zwischen den Fasselementen der ersten Fassanordnung, sodass Fisch, der nicht von den Fasselementen der ersten Fassanordnung gefasst wird, durch den Zwischenraum zwischen den Fasselementen der ersten Fassanordnung hindurchfällt und in dem Zwischenraum zwischen den Fasselementen der zweiten Fassanordnung aufgenommen und zwischen den Fasselementen der zweiten Fassanordnung gefasst wird;
wobei optional die Fasselemente ausgestaltet sind, um eine Vielzahl von Fischen auf einmal zu fassen, sodass die Fische entlang des Zwischenraums voneinander beabstandet sind; und
wobei optional der Fisch Eberfisch ist.

3. Fischverarbeitungsvorrichtung gemäß Anspruch 1 oder Anspruch 2, wobei die Vorrichtung eine Schneidanordnung (30) zum Köpfen des zwischen den Fasselementen gefassten Fisches beinhaltet;
wobei optional die Schneidanordnung ausgestaltet ist, um den Fisch an einer Halsregion zu köpfen, sodass der Fisch, nachdem der Kopf des Fisches abgeschnitten worden ist, in der Fassanordnung gefasst bleibt und eine Öffnung zu der Bauchhöhle des Fisches gebildet wird und diese Öffnung nach oben gerichtet ist.

4. Fischverarbeitungsvorrichtung gemäß Anspruch 3, wobei die Fassanordnung Greifelemente, die zwischen den Fasselementen und der Schneidanordnung zum Greifen und Halten des geköpften Fisches an den Seiten des Fisches vorgesehen sind, beinhaltet, wobei die Greifelemente einen Zwischenraum dazwischen definieren, sodass der Fisch von den Fasselementen in dem Zwischenraum aufgenommen und von den Greifelementen gegriffen wird;
wobei optional die Greifelemente ein Paar von im Wesentlichen parallelen Aufgabebändern (400) beinhalten, wobei die Aufgabebänder beabstandet sind und den Zwischenraum definieren.

5. Fischverarbeitungsvorrichtung gemäß Anspruch 3 oder Anspruch 4, wobei die Schneidanordnung ein oder mehrere Messer zum Köpfen des Fisches umfasst.

6. Fischverarbeitungsvorrichtung gemäß Anspruch 5, wobei die Schneidanordnung ein Paar von Messern umfasst;
wobei die Messer rotierende Kreismesser (31) umfassen;
wobei mindestens ein Messer auf jeder Seite einer Längsachse der Fassanordnung vorgesehen ist und die Fassanordnung in Relation zu den Messern linear beweglich ist, sodass ein Fisch zwischen die Messer gelangt, während er von der Fassanordnung getragen wird, sodass der Kopf des Fisches von den Messern abgeschnitten wird; wobei jedes Messer eine Schnittkante (310) aufweist, die mit Bezug auf die Schneidanordnung über eine Bewegungsstrecke des von der Fassanordnung gehaltenen Fisches hinweg positioniert ist; und
wobei die Messer rotierbar sind, sodass diejenigen ihrer Schnittkanten, die mit Bezug auf die Schneidanordnung am nächsten bei der Bewegungsstrecke des von der Fassanordnung gehaltenen Fisches sind, in derselben Richtung rotieren, wie die Richtung der linearen Fortbewegung der Fassanordnung relativ zu den Messern, sodass die Schnittkanten in einen näher kommenden Fisch eingreifen und ihn zwischen die Schnittkanten einziehen.

7. Fischverarbeitungsvorrichtung gemäß einem vorhergehenden Anspruch, wobei die zum Zuführen von Fisch zu den Fasselementen in einer zufälligen Ausrichtung ausgestaltete Anordnung ausgestaltet ist, um den Fisch von einer Stelle oberhalb der Fasselemente auf die Fasselemente fallen zu lassen.

8. Fischverarbeitungsvorrichtung gemäß einem vorhergehenden Anspruch, wobei die zum Zuführen eines Fisches zu den Fasselementen in einer zufälligen Ausrichtung ausgestaltete Anordnung ein Förderband (38) umfasst, auf das der Fisch zunächst in einer zufälligen Ausrichtung zum Zuführen des Fisches auf die Fasselemente gelegt wird;
wobei optional das Förderband ein Austragsende (381) oberhalb der Fasselemente umfasst, sodass der Fisch von dem Förderband auf die Fasselemente fällt.

9. Fischverarbeitungsvorrichtung gemäß Anspruch 7 oder 8, wobei die Vorrichtung eine Führungseinrichtung (80) zum Führen des Fisches zu den Fasselementen hin umfasst; wobei optional die Führungseinrichtung eine trichterartige Anordnung mit einem breiteren Ende (84), das von den Fasselementen beabstandet ist, und einem schmaleren Ende (86), das näher bei den Fasselementen liegt als das breitere Ende, beinhaltet, wobei sich das breitere Ende am oder um das Austragsende des Förderbands befindet.

10. Ein Verfahren zum Verarbeiten von Fisch (4), der eine Verdickung entlang seines Körpers aufweist, wobei das Verfahren folgende Schritte beinhaltet:
Vorsehen einer Vorrichtung (100, 200) gemäß Anspruch 1, die eine erste Fassanordnung (110, 210) beinhaltet, die ein erstes Paar von Fasselementen (3) beinhaltet, wobei die Fasselemente beabstandet sind und einen Zwischenraum (32) dazwischen definieren, wobei die Größe des Zwischenraums mit einem vorbestimmten Bereich von Größen einer vorbestimmten Fischspezies korrespondiert;
Zuführen eines Fisches zu den Fasselementen der Vorrichtung; und
Bewirken, dass der Fisch in dem Zwischenraum aufgenommen und zwischen den Fasselementen gefasst wird, wobei die Fasselemente und die Verdickung verhindern, dass der Fisch durch den und aus dem Zwischenraum zwischen den Fasselementen gelangt;
Fassen des Fisches in einer senkrechten Position durch die Fasselemente, sobald der Fisch in den Zwischenraum hineingelangt ist; und
wobei das Verfahren den Schritt des Zuführens eines Fisches zu den Fasselementen in einer zufälligen Ausrichtung umfasst.

11. Verfahren gemäß Anspruch 10, wobei das Verfahren das Bewegen der Fasselemente umfasst;
wobei optional das Verfahren den Schritt des Fassens von einer Vielzahl von Fischen auf einmal auf den Fasselementen beinhaltet, sodass die Fische entlang des Zwischenraums voneinander beabstandet sind;
wobei optional das Verfahren umfasst, dass zugelassen wird, dass die Fische in den Zwischenraum zwischen den Fasselementen hineingelangen und zwischen den Fasselementen gegriffen werden, wobei seitlich vorstehende Gräten an dem Hals des Fisches als Vorsprung dienen, der an den Fasselementen gegriffen wird und verhindert, dass der Fisch durch die Fasselemente gelangt, wobei das Verfahren umfasst, dass zugelassen wird, dass ein hinterer Teil des Fisches durch den Zwischenraum zwischen den Fasselementen gelangt, während der Kopf von den Fasselementen gefasst bleibt, sodass der Fisch unabhängig von der Ausrichtung, in welcher der Fisch den Fasselementen zugeführt wurde, stets in derselben Ausrichtung gefasst wird;
wobei optional das Verfahren das Tragen des Fisches auf den Fasselementen unter dem Eigengewicht des Fisches umfasst;
wobei optional das Verfahren umfasst, dass zugelassen wird, dass der Fisch von einer Stelle oberhalb der Fasselemente auf die Fasselemente fällt und von den Fasselementen weiterhin getragen wird;
wobei optional das Verfahren das Fassen des Fisches am Hals durch die Fasselemente umfasst;
wobei optional das Verfahren das Fassen des Fisches zwischen den Fasselementen umfasst, wobei sein Schwanz nach unten und sein Kopf nach oben gerichtet ist; wobei optional das Verfahren das Waschen ausgenommenen Fisches durch Nutzung eines oder mehrerer Sprühköpfe (94) umfasst;
wobei das erste Paar von Fasselementen als ein Paar von im Wesentlichen parallelen Aufgabebändern (3) vorgesehen ist, wobei die Aufgabebänder beabstandet sind und den Zwischenraum (32) definieren; und
wobei optional der Fisch Eberfisch ist.

12. Verfahren gemäß Anspruch 10 oder Anspruch 11, wobei das Verfahren den Schritt des Köpfens des zwischen den Fasselementen gefassten Fisches durch eine Schneidanordnung (30) umfasst;
wobei optional das Verfahren das Köpfen des Fisches an einer Halsregion durch die Schneidanordnung umfasst, sodass der Fisch, nachdem der Kopf des Fisches abgeschnitten worden ist, in der Fassanordnung gefasst bleibt;
wobei optional das Verfahren das Bilden einer Öffnung zu der Bauchhöhle des Fisches beim Abschneiden des Kopfes des Fisches umfasst, wobei die Öffnung nach oben gerichtet ist, wodurch verhindert wird, dass Innereien aus der Höhle herausfallen und die Umgebung verunreinigen.

13. Verfahren gemäß Anspruch 12, wobei das Verfahren das Vorsehen eines oder mehrerer Messer als die Schneidanordnung zum Köpfen des Fisches umfasst;
wobei optional das eine oder die mehreren Messer rotierende Kreismesser (31) umfassen und das Verfahren das Vorsehen eines Messers auf jeder Seite einer Längsachse der Fassanordnung und das lineare Bewegen der Fassanordnung in Relation zu den Messern umfasst, sodass ein Fisch zwischen die Messer gelangt, während er von der Fassanordnung getragen wird, sodass der Kopf des Fisches von den Messern abgeschnitten wird; und das Rotieren der Messer umfasst, sodass ihre Schnittkanten (310) in derselben Richtung wie die Richtung der linearen Fortbewegung der Fassanordnung relativ zu den Messern, sodass die Schnittkanten in einen näher kommenden Fisch eingreifen und ihn zwischen die Schnittkanten einziehen.

14. Verfahren gemäß einem der Ansprüche 10 bis 13, wobei das Verfahren das Vorsehen eines Förderbands (38), das Legen des Fisches auf das Förderband in einer zufälligen Ausrichtung und das Zuführen des Fisches auf die Fasselemente durch das Förderband umfasst;
wobei optional das Verfahren das Bilden des Förderbands mit einem Austragsende (381) oberhalb der Fasselemente umfasst, sodass zugelassen wird, dass der Fisch von dem Förderband auf die Fasselemente fällt;
wobei optional das Verfahren das Vorsehen einer Führungseinrichtung (80) und das Führen des Fisches zu den Fasselementen hin durch die Führungseinrichtung umfasst.

15. Verfahren gemäß einem der Ansprüche 10 bis 14, wobei das Verfahren den Schritt des Ausnehmens des geköpften Fisches durch einen oder mehrere Vakuumköpfe (90, 92) umfasst.

## Revendications

1. Un appareil (100, 200) pour la transformation de poissons (4) destiné à transformer du poisson qui présente un épaississement le long de son corps, l'appareil comprenant un premier agencement de capture (110, 210) comprenant une première paire d'éléments de capture (3), les éléments de capture étant écartés l'un de l'autre, définissant un espace vide (32) entre eux, la taille de l'espace vide correspondant à une gamme de tailles préétablie d'une espèce de poissons préétablie de manière que, lorsque le poisson est livré aux éléments de capture, le poisson soit reçu dans l'espace vide et capturé entre les éléments, les éléments et l'épaississement empêchant le poisson de passer à travers et de ressortir de l'espace vide entre les éléments ;
dans lequel, lors de l'utilisation, les éléments de capture permettent de capturer le poisson dans une position verticale dès que le poisson est entré dans l'espace vide (32),
**caractérisé en ce que** l'appareil comprend un agencement configuré pour livrer le poisson aux éléments de capture dans une orientation quelconque.

2. Un appareil pour la transformation de poissons tel que revendiqué dans la revendication 1, dans lequel les éléments de capture sont des éléments de capture mobiles de façon à fonctionner à la fois en tant que dispositif de capture et en tant que dispositif de transfert ;
dans lequel, éventuellement, les éléments de capture sont configurés pour soutenir le poisson sous le propre poids du poisson de sorte que le poisson puisse tomber sur les éléments de capture et continue à être soutenu par les éléments de capture ;
dans lequel, éventuellement, les éléments de capture sont configurés pour capturer le poisson au niveau du cou ;
dans lequel, éventuellement, les éléments de capture sont configurés pour capturer le poisson entre eux, la queue du poisson pointant vers le bas et sa tête pointant vers le haut ;
dans lequel, éventuellement, la première paire d'éléments de capture comprend une paire de courroies formant bandes d'alimentation substantiellement parallèles (3), les courroies formant bandes d'alimentation étant écartées l'une de l'autre, définissant l'espace vide ;
dans lequel, éventuellement, l'appareil comprend une ou plusieurs têtes d'aspiration (90, 92) destinées à éviscérer le poisson décapité ;
dans lequel, éventuellement, une ou plusieurs têtes de pulvérisation (94) sont prévues pour laver le poisson éviscéré ;
dans lequel, éventuellement, un deuxième agencement de capture (210a) est prévu en dessous du ou de chaque premier agencement de capture, lequel possède une deuxième paire d'éléments de capture agencés essentiellement de la même manière que le premier agencement de capture à la différence que la taille de l'espace vide (32a) entre les éléments de capture du deuxième agencement de capture est plus petite que celle de l'espace vide (32) entre les éléments de capture du premier agencement de capture et correspond à une deuxième gamme de tailles préétablie de l'espèce de poissons préétablie, les tailles des poissons de la deuxième gamme étant plus petites que l'espace vide entre les éléments de capture du premier agencement de capture de manière que le poisson qui ne se retrouve pas capturé par les éléments de capture du premier agencement de capture tombe par l'espace vide entre les éléments de capture du premier agencement de capture, soit reçu dans l'espace vide entre les éléments de capture du deuxième agencement de capture et soit capturé entre les éléments de capture du deuxième agencement de capture ;
dans lequel, éventuellement, les éléments de capture sont configurés pour capturer une pluralité de poissons en même temps de manière que les poissons soient écartés les uns des autres le long de l'espace vide ; et
dans lequel, éventuellement, le poisson est du sanglier de mer.

3. Un appareil pour la transformation de poissons tel que revendiqué dans la revendication 1 ou la revendication 2, l'appareil comprenant un agencement de découpe (30) destiné à étêter le poisson capturé entre les éléments de capture ; dans lequel, éventuellement, l'agencement de découpe est configuré pour étêter le poisson au niveau d'une région de cou de sorte que, après que la tête du poisson a été coupée, le poisson demeure capturé dans l'agencement de capture, qu'une ouverture dans la cavité abdominale du poisson soit pratiquée et que cette ouverture soit tournée vers le haut.

4. Un appareil pour la transformation de poissons tel que revendiqué dans la revendication 3, dans lequel l'agencement de capture comprend des éléments d'agrippement prévus entre les éléments de capture et l'agencement de découpe destinés à agripper et à tenir le poisson étêté au niveau des flancs du poisson, les éléments d'agrippement définissant un espace vide entre eux de sorte que le poisson soit reçu depuis les éléments de capture dans l'espace vide et soit agrippé par les éléments d'agrippement ;
dans lequel, éventuellement, les éléments d'agrippement comprennent une paire de courroies de traction (400) substantiellement parallèles, les courroies de traction étant écartées l'une de l'autre, définissant l'espace vide.

5. Un appareil pour la transformation de poissons tel que revendiqué dans la revendication 3 ou la revendication 4, dans lequel l'agencement de découpe comporte une ou plusieurs lames destinées à étêter le poisson.

6. Un appareil pour la transformation de poissons tel que revendiqué dans la revendication 5, dans lequel l'agencement de découpe comporte une paire de lames ; dans lequel les lames comportent des lames circulaires rotatives (31) ;
dans lequel au moins une lame est prévue au niveau de chaque côté d'un axe longitudinal de l'agencement de capture et l'agencement de capture est linéairement déplaçable relativement aux lames de sorte qu'un poisson passe entre les lames tout en étant soutenu par l'agencement de capture de sorte que la tête du poisson soit coupée par les lames ;
dans lequel chaque lame a un bord de coupe (310) positionné en travers d'une trajectoire de déplacement, respectivement à l'agencement de découpe, du poisson qui est tenu par l'agencement de capture ; et
dans lequel les lames peuvent être tournées de sorte que leurs bords de coupe les plus proches de la trajectoire de déplacement, respectivement à l'agencement de découpe, du poisson qui est tenu par l'agencement de capture tournent dans la même direction que la direction d'avance linéaire de l'agencement de capture relativement aux lames, de sorte que les bords de coupe se mettent en prise avec un poisson en approche et le tirent jusqu'entre les bords de coupe.

7. Un appareil pour la transformation de poissons tel que revendiqué dans n'importe quelle revendication précédente, dans lequel l'agencement configuré pour livrer le poisson aux éléments de capture dans une orientation quelconque est configuré pour laisser tomber le poisson sur les éléments de capture depuis un emplacement au-dessus des éléments de capture.

8. Un appareil pour la transformation de poissons tel que revendiqué dans n'importe quelle revendication précédente, dans lequel l'agencement configuré pour livrer le poisson aux éléments de capture dans une orientation quelconque comporte une courroie transporteuse (38) sur laquelle le poisson est initialement mis dans une orientation quelconque et destinée à livrer le poisson sur les éléments de capture ; dans lequel, éventuellement, la courroie transporteuse comporte une extrémité de décharge (381) au-dessus des éléments de capture de manière que le poisson tombe sur les éléments de capture depuis la courroie transporteuse.

9. Un appareil pour la transformation de poissons tel que revendiqué dans la revendication 7 ou la revendication 8, l'appareil comportant un dispositif de guidage (80) destiné à guider le poisson vers les éléments de capture ;
dans lequel, éventuellement, le dispositif de guidage comprend un agencement ressemblant à un entonnoir présentant une extrémité plus large (84) à l'écart des éléments de capture et une extrémité plus étroite (86) plus proche des éléments de capture que l'extrémité plus large, dans lequel l'extrémité plus large est située au niveau de ou près de l'extrémité de décharge de la courroie transporteuse.

10. Une méthode pour transformer du poisson (4) qui présente un épaississement le long de son corps, la méthode comprenant les étapes consistant à :
prévoir un appareil (100, 200) selon la revendication 1, comprenant un premier agencement de capture (110, 210) comprenant une première paire d'éléments de capture (3), les éléments de capture étant écartés l'un de l'autre, définissant un espace vide (32) entre eux, la taille de l'espace vide correspondant à une gamme de tailles préétablie d'une espèce de poissons préétablie ;
livrer le poisson aux éléments de capture de l'appareil ; et
amener le poisson à être reçu dans l'espace vide et à être capturé entre les éléments de capture, les éléments de capture et l'épaississement empêchant le poisson de passer à travers et de ressortir de l'espace vide entre les éléments de capture ;
capturer le poisson dans une position verticale au moyen des éléments de capture dès que le poisson est entré dans l'espace vide ; et
la méthode comportant l'étape consistant à livrer le poisson aux éléments de capture dans une orientation quelconque.

11. Une méthode de la revendication 10, la méthode comportant le fait de déplacer les éléments de capture ;
la méthode comprenant, éventuellement, l'étape consistant à capturer une pluralité de poissons en même temps sur les éléments de capture de manière que les poissons soient écartés les uns des autres le long de l'espace vide ;
la méthode comportant, éventuellement, le fait de laisser le poisson entrer dans l'espace vide entre les éléments de capture et se faire attraper entre les éléments de capture, dans laquelle des arêtes dépassant latéralement au niveau du cou du poisson servent de rebord qui s'accroche sur les éléments de capture et empêche le poisson de passer à travers les éléments de capture, la méthode comportant le fait de laisser passer une partie arrière du poisson à travers l'espace vide entre les éléments de capture tandis que la tête demeure capturée par les éléments de capture de sorte que le poisson soit toujours capturé dans la même orientation quelle que soit l'orientation dans laquelle le poisson a été livré aux éléments de capture ;
la méthode comportant, éventuellement, le fait de soutenir le poisson sur les éléments de capture sous le propre poids du poisson ;
la méthode comportant, éventuellement, le fait de laisser le poisson tomber sur les éléments de capture depuis un emplacement au-dessus des éléments de capture et continuer à être soutenu par les éléments de capture ;
la méthode comportant, éventuellement, le fait de capturer le poisson au niveau du cou au moyen des éléments de capture ;
la méthode comportant, éventuellement, le fait de capturer le poisson entre les éléments de capture, la queue du poisson pointant vers le bas et sa tête pointant vers le haut ;
la méthode comportant, éventuellement, le fait de laver le poisson éviscéré en utilisant une ou plusieurs têtes de pulvérisation (94) ;
dans laquelle, éventuellement, la première paire d'éléments de capture est fournie sous la forme d'une paire de courroies formant bandes d'alimentation (3) substantiellement parallèles, les courroies formant bandes d'alimentation étant écartées l'une de l'autre, définissant l'espace vide (32) ; et
dans laquelle, éventuellement, le poisson est du sanglier de mer.

12. Une méthode de la revendication 10 ou de la revendication 11, la méthode comportant l'étape consistant à étêter le poisson capturé entre les éléments de capture grâce à un agencement de découpe (30) ;
la méthode comportant, éventuellement, le fait d'étêter le poisson au niveau d'une région de cou au moyen de l'agencement de découpe de sorte que, après que la tête du poisson a été coupée, le poisson demeure capturé dans l'agencement de capture ; la méthode comportant, éventuellement, le fait de pratiquer une ouverture dans la cavité abdominale du poisson après avoir coupé la tête du poisson, l'ouverture étant tournée vers le haut, empêchant de ce fait toutes entrailles de tomber de la cavité et de contaminer ce qu'il y a autour.

13. Une méthode de la revendication 12, la méthode comportant le fait de prévoir une ou plusieurs lames en tant qu'agencement de découpe destiné à étêter le poisson ;
dans laquelle, éventuellement, cette ou ces lames comportent des lames circulaires rotatives (31) et la méthode comporte le fait de prévoir une lame au niveau de chaque côté d'un axe longitudinal de l'agencement de capture et de déplacer l'agencement de capture linéairement relativement aux lames de sorte qu'un poisson passe entre les lames tout en étant soutenu par l'agencement de capture de sorte que la tête du poisson soit coupée par les lames ; et le fait de faire tourner les lames de sorte que leurs bords de coupe (310) tournent dans la même direction que la direction d'avance linéaire de l'agencement de capture relativement aux lames de sorte que les bords de coupe se mettent en prise avec un poisson en approche et le tirent jusqu'entre les bords de coupe.

14. Une méthode de l'une quelconque des revendications 10 à 13, la méthode comportant le fait de prévoir une courroie transporteuse (38), de mettre le poisson sur la courroie transporteuse dans une orientation quelconque et de livrer le poisson sur les éléments de capture au moyen de la courroie transporteuse ;
la méthode comportant, éventuellement, le fait de former la courroie transporteuse avec une extrémité de décharge (381) au-dessus des éléments de capture de manière que le poisson puisse tomber sur les éléments de capture depuis la courroie transporteuse ; la méthode comportant, éventuellement, le fait de prévoir un dispositif de guidage (80) et de guider le poisson vers les éléments de capture au moyen du dispositif de guidage.

15. Une méthode de l'une quelconque des revendications 10 à 14, la méthode comportant l'étape consistant à éviscérer le poisson décapité au moyen d'une ou de plusieurs têtes d'aspiration (90, 92).
